# EUROPEAN PATENT SPECIFICATION

(11) **EP 2 245 134 B1**
(45) Date of publication and mention of the grant of the patent: **31.10.2018**
(21) Application number: 09702991.2
(22) Date of filing: 14.01.2009
(51) Int. Cl.: C12G 3/07, B27L 5/02, B27L 5/08, C12G 3/06, C12J 1/00, C12J 1/10

(54) **WOOD INFUSED LIQUID CONSUMABLES**
FLÜSSIGSTOFFE MIT HOLZINFUSION
PRODUITS DE CONSOMMATION LIQUIDES INFUSÉS AU CONTACT DU BOIS

(30) Priority: 15.01.2008 ZA 200800387
(43) Date of publication of application: 03.11.2010
(73) Proprietor: Stellenbosch University, 7600 Western Cape Province (ZA)
(72) Inventor: SWART, Jan, Philippus, Jakobus, 7130 Somerset West (ZA); RYPSTRA, Tiemen, 7600 Stellenboscch (ZA); THERON, Charl, Wynand, 7130 Somerset West (ZA)
(74) Representative: Watson, Robert James
(86) International application number: PCT/IB2009/000040
(87) International publication number: WO 2009/090532

(56) References cited:
- GB-A- 2 181 403
- GB-A- 190 905 042
- US-A- 2 114 009
- US-A- 3 680 613
- US-A- 5 054 381
- US-A1- 2006 191 419
- US-A1- 2007 259 299
- US-B1- 6 378 419

## Description

### FIELD OF THE INVENTION

This invention relates to wood infused liquid consumables such as wine and other alcoholic beverages, vinegar and other liquid condiments and agents and, more particularly, to the production of such wood infused liquid consumables as well as to a physical form of wooden component for use in the relevant production process.

It is to be understood that the term wood infused liquid consumables as used in this specification is intended to mean liquid consumables produced by any procedure whereby contact between the liquid consumable and wood during the production process causes compounds to be exchanged between the liquid and wood, both from the wood into the liquid and also possibly from the liquid into the wood. Such contact may also cause chemical and/or physical reactions to take place resulting in the formation of new or modified compounds irrespective of the mechanisms whereby any exchanges or reactions take place.

Also in this specification "liquid consumable" shall have its widest meaning and includes any beverage or edible liquid product which may employ contact with wood in the production thereof for the purpose of modifying the properties of the beverage or product.

### BACKGROUND TO THE INVENTION

Wood has been widely used in the manufacture of liquid consumables, particularly alcoholic beverages such as fortified and unfortified wine, brandy, whisky and the like, as well as for other products such as vinegar.

Historically, wood has been used to form barrels in which the liquid consumables are matured or stored for a period of time. The function of the wood of the barrel is three-fold. The first is to act as a workable, leak-free, strong and durable material for a container; the second is to act as a source of chemical substances that infuse into the liquid consumable to impart desirable characteristics, such as fragrance, taste and colour to the product; and the third is to function as a partially permeable vessel that allows the limited passage of gases, in particular oxygen, and liquids through it. The wood is often "toasted" in order to alter the effect of the infusion on the liquid, at least to some extent.

These functions are generally dictated by the properties of the wood material such as provenance, species, grain, part of the tree, density, age and processing conditions such as timber log breakdown, drying, barrel manufacture and toasting methods. Certain oak species are well known for exhibiting desirable properties.

Wooden barrels are, however, expensive and difficult to manufacture and hence their use adds significantly to the cost of production of the liquid consumable. A limited amount of timber from logs is suitable for stave production thereby restricting utilisation of a tree. Also, in the manufacture of the barrels, there is significant wastage of wood as staves have to be produced from the wood with the width of a stave extending in a generally radial direction in order to achieve necessary liquid retention properties. The staves are then shaped to form part of a barrel. There is considerable wastage of wood in the form of off-cuts and shavings.

There has therefore been a movement toward to the use of stainless steel containers to which pieces of wood are added in various different physical dimensions and shapes such as staves, slats, rectangular rods, small blocks, wood chips or even wood powder. Examples of various developments that have taken place over the years in this regard are contained in US patents 2114009, 5054381, 6378419 and 7357069, and UK patents GB05042 and GB2181403. US7357069 also contains an outline of the prior art. None of these documents describe the manner in which the pieces of wood are cut. US patent 3680613 describes a control for a veneer lathe which allows the thickness of veneer peeled from a log to be changed. US application US2006/0191419 describes a wooden element which is attached to the inside of a screw-type wine vessel closure or to a stopper, or which is prevented from leaving the bottle during pouring by deformable shape.

More recently, liquid extracts of wood have also been added to a product in stainless steel containers although the use of such extracts is prohibited in many jurisdictions.

While varying degrees of success have been achieved with the pieces of wood added to stainless steel containers, various problems remain. With slats or other sawn pieces of wood there is still significant wastage of wood in the form of sawdust, shavings and off-cuts. Also, there is little control over the properties of the pieces of wood thus making it difficult to reproduce results consistently. With currently used wood chips, results can be erratic as there is little certainty from which tree and part of the tree the chips originate and their random wood anatomical orientation, shapes and size do not permit homogeneous or reproducible performance in terms of the manner in which they react with, or impart properties to, the liquid consumable.

Although they are more consistent, for example in shape and size, slats and rods also exhibit variations in infusion performance.

Also, wood powder has only really been found to be suitable in limited applications. Furthermore, with wood powder it is impossible to easily determine the type (e.g. provenance or species) or part of tree used in its makeup.

The problems experienced with stainless steel or plastic barrel alternatives results in the fact that wooden barrels remain widely used.

### OBJECT OF THE INVENTION

It is an object of this invention to provide a method of producing a wood infused liquid consumable which may enhance the infusion process; may enable more consistent and reliable results to be achieved; and that may increase the utilization of suitable wooden parts of a tree.

### SUMMARY OF THE INVENTION

In accordance with one aspect of this invention there is provided a method of producing a liquid consumable, the method characterised in that the liquid consumable is contained within a container and is contacted with one or more wooden components which have been cut so that:
(i) wood cells of the wooden components have a uniform anatomical cell orientation; and
(ii) ray parenchyma tissue extends longitudinally across a thickness (T) of the wooden components,

in order to enable a consistent and uniform wood infusion process to take place, wherein said one or more wooden components are severed parts of an intermediate wooden sheet cut from a log of wood by rotary cutting the intermediate wooden sheet tangentially from the outer surface of the log of wood in veneer fashion.

Further features of this aspect of the invention provide for the wooden component or components to have a thickness of from 0.5 mm to 10 mm, preferably from 1 mm to 8 mm, and most preferably from between 3 mm to 6 mm; for the thickness of the wooden components to be selected to provide adequate structural integrity to each component during contact thereof with the liquid consumable; for the wooden component or components to be cut from the intermediate wooden sheet by means of a suitable guillotine or other smooth edged blade that severs the intermediate wooden sheet without generating any appreciable waste such as sawdust; for the wooden components to have the general form of sheets, strips (or slats), rectangular cross-sectioned rods, or small blocks; for each wooden component to be composed of heartwood thereby substantially excluding sapwood associated with the outer region of a log of wood as well as excluding juvenile wood associated with the central core of a log of wood; and for each wooden component to be composed of a type of wood traditionally used for the construction of a wooden barrel, in particular an acceptable oak.

Still further features of the invention provide for the wooden components to be processed further for use such as by drying and suitably "toasting" them. Also disclosed are features that provide for the wooden component or components to be located in a container in which the consumable liquid is maintained in contact with the wooden component or components for a residence time determined either empirically or according to the actual degree of infusion that has taken place and as may be determined periodically by testing the liquid consumable at appropriate intervals; or alternatively, for the consumable liquid to be circulated, and optionally recirculated, through a container in which the wooden component or components are present; for the wooden component or components to be supported, when required, in the container by means of a suitable support structure such as a frame to which the wooden components can be releasably attached, typically in a manner such that the wooden components are suspended from the support structure; and, further alternatively, or in addition, for a wooden component to assume the form of one or more wooden sheets forming a replaceable lining to the container.

It will be understood that by cutting the intermediate wooden sheet from a log of wood in the manner defined above, the cut is made transversely to radially extending bands of wood anatomical cell orientations and thus enhanced accessability to the extractive wood storing tissues, such as parenchyma ray tissue, is achieved. The more permeable bands of cell structures therefore extend across the thickness of the wooden components and provide enhanced access to the extractive wood storing tissues.

The invention will be further described, by way of example only, with reference to the accompanying drawings.

### BRIEF DESCRIPTION OF THE DRAWINGS

In the drawings:-
- Figure 1: is a part-sectional schematic perspective view of a first application of wooden components in use in a container in accordance with the invention;
- Figure 2: is a sketch illustrating a process for forming an intermediate wooden sheet by rotary cutting it in veneer fashion from the outer surface of a log of wood;
- Figure 3: is a schematic isometric view showing part of an intermediate wooden sheet produced by the process illustrated in Figure 2 and indicating one form of wooden component that may be severed therefrom;
- Figure 4: illustrates the general form of a wooden component in the form of a wooden sheet;
- Figure 5: illustrates the general form of a wooden component in the form of a wooden strip (or slat);
- Figure 6: illustrates the general form of a wooden component in the form of a wooden rod;
- Figure 7: illustrates the general form of wooden components in the form of wooden blocks;
- Figure 8: is a part-sectional schematic perspective view of a second application of a wooden component in use in a liquid consumable production process; and
- Figure 9: is a part-sectional schematic perspective view of a third application of a wooden component in use in a liquid consumable production process.

### DETAILED DESCRIPTION WITH REFERENCE TO THE DRAWINGS

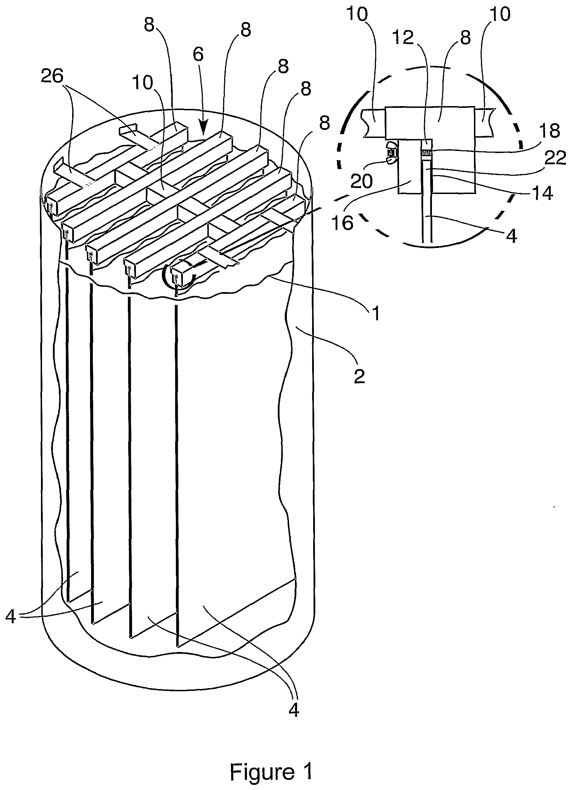

One method of producing a liquid consumable (1), in this application wine, is described with reference to Figure 1 and includes introducing the liquid consumable (1) into a stainless steel container (2) for the purpose of undergoing a wood infusion step by contact with wooden components for a predetermined residence time or, alternatively, until such time as the relevant beverage maker determines that the beverage has acquired a desirable degree of wood infusion.

In this embodiment of the invention, wooden components are in the form of elongate wooden sheets (4) that are suspended within the container from a frame (6) so that they become immersed in the wine. The frame (6) includes a number of parallel, spaced apart, generally horizontal hanger bars (8) which are joined by a centrally extending cross-member (10). Both the hanger bars (8) and cross-member (10) are conveniently moulded from a high density plastics material.

As shown in the inset in Figure 1, each hanger bar (8) has a rabbet (12) extending along the lower part of one side (14) thereof. A strip (16) of the same plastics material is secured in the rabbet (12) by a series of spaced apart bolts (18) extending from the side (14) and cooperating wing nuts (20). The top (22) of each wooden sheet (4) is releasably secured between its associated strip (16) and cooperating side (14) of the associated rabbet (12) of the respective hanger bar (8) to depend there from. The wooden sheets are thus easily replaceable as and when required.

The frame (6) is supported in the container (2) by arms (26) (only two of which are shown) which extend inwardly from the sides thereof.

In this embodiment of the invention, the wooden sheets (4) are made from a suitable part of wood such as the currently used *Quercus spp.* (oak) and are, in this instance, approximately 4 mm thick. It is envisaged that the wooden sheets will typically be from 0.5mm to 10mm thick depending on the application and the number of wooden sheets used as well as purely physical characteristics that ensure that the wooden sheets maintain their structural integrity during their life cycle. The thickness that is actually employed in any particular process will depend largely on the physical properties of the wood; the shape and size of the wooden components; and the stresses that may be imposed on them during their operative life cycle.

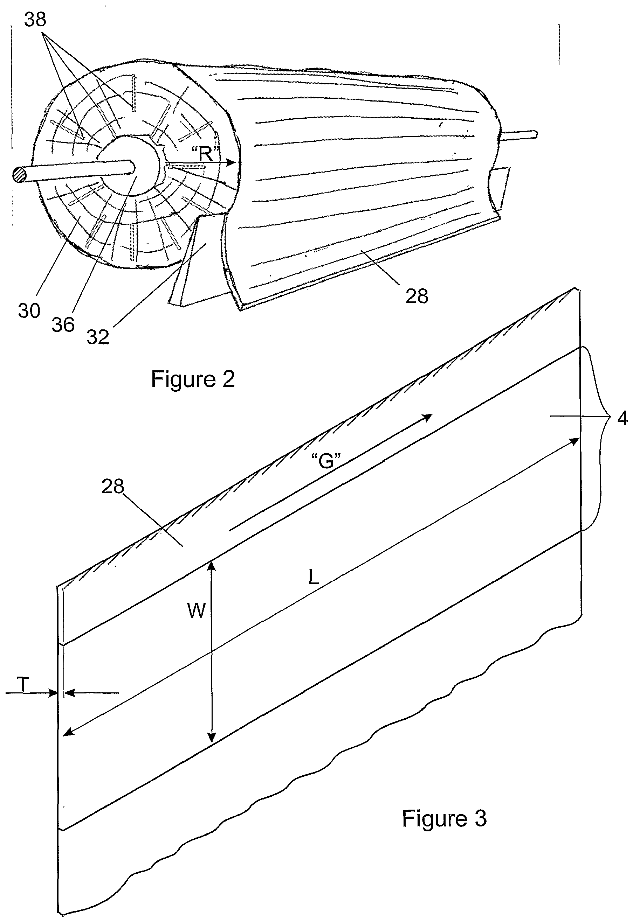

Referring now more particularly to Figures 2 and 3 of the drawings, the wooden sheets (4) are, in this embodiment, severed from an intermediate wooden sheet (28) made by a process that is described below and that is also known as rotary peeling. The intermediate wooden sheet is cut by rotary cutting it in veneer fashion using either a veneer lathe that uses spindles and dogs for rotating a log or a spindleless veneer lathe. In either event the intermediate wooden sheet is formed by shaving a layer corresponding to its thickness tangentially from the outer surface of a log (30) of wood such that the intermediate wooden sheet has a thickness "T" taken generally in the radial direction "R" with respect to the log of wood from which it is cut. The wooden sheet (4) forming the wooden component of this embodiment the invention, may have, in this instance, a length "L" corresponding to the length of the log of wood from which it is cut (this being the direction in which the grain "G" extends) and a width "W" that is determined by the extent of the intermediate wooden sheet selected.

The above is thus achieved by rotating the log (30) relative to a blade (32) so that the intermediate wooden sheet (28) is formed in a manner resembling the way in which paper may be unwound from a roll. The thickness "T" of the intermediate wooden sheet (28) and thus the wooden sheets (4) can be accurately controlled by adjustments to the position and orientation of the blade (32) in a manner that is well known at least in the veneer industry.

This procedure is conducted such that the wooden components of the invention, namely the wooden sheets (4) in this instance, are composed substantially entirely of heartwood with the exclusion of sapwood associated with the outer region of a log of wood and also with the exclusion of juvenile wood associated with the central core of the log of wood. It is to be mentioned that this is particularly easy to achieve utilising a rotary cutting procedure as the initial intermediate wooden sheet that serves to remove the sapwood from the outside of a log can usually be easily distinguished optically or visually simply on the basis of colour from the intermediate wooden sheet that is of heartwood and is usable for forming wooden components of the invention. The heartwood is typically much darker in colour than the sapwood. The sapwood sheet could, of course, be used for other purposes such as furniture making, for example. However, it is envisaged that it may also be possible to utilise the sapwood in a liquid consumable manufacturing process, especially if it is processed to provide suitable characteristics although further research in this direction will be required.

Also excluded from use for the purpose of forming wooden components according to the invention is the central juvenile wood in the centre of a log. In the instance that is illustrated in Figure 2 in which co-axial rotating dogs (36) are employed to engage and rotate the log during the production of the intermediate wooden sheet, the physical size of the dogs automatically prevents the juvenile wood from being cut. However, in a spindleless process care should be taken to avoid the inclusion of juvenile wood.

It is to be noted that whilst a wooden sheet has been described above as the form of wooden component according to the invention, the wooden components could assume a wide variety of different forms, in each instance preferably cut from the intermediate wooden sheet using a guillotine or other smooth edged blade that does not give rise to any significant production of loose particles, sawdust or other waste.

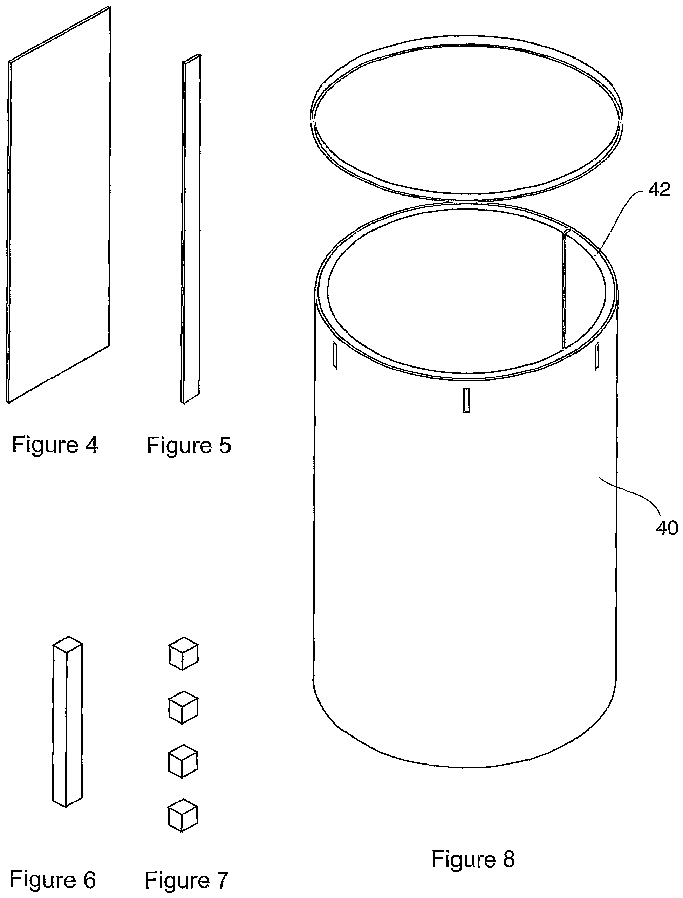

Thus, simply for the sake of completeness, Figure 4 illustrates a wooden sheet having a width and length of substance; Figure 5 illustrates a wooden strip having a width significantly less than the length; Figure 6 illustrates a wooden rod of generally square cross-section in which the width and thickness of the same order; and Figure 7 illustrates small wooden blocks in which the thickness, length and width are all of generally the same order. In each instance the wooden components are most conveniently and effectively cut from the intermediate sheet using a blade such as in a guillotine or any other smooth edged blade that does not create any significant waste.

Of course, the wooden components may be processed further for use such as by drying and suitably "toasting" them and for convenience of production these process steps may be carried out on the intermediate wooden sheet before it is severed to create the individual wooden components.

The advantages of using wooden components produced in this manner, include the uniformity of the components that is achieved as well as uniformity of infusion during contact with a liquid consumable and hence reproducibility of results in the liquid consumable production process. Also, there is far less waste of heartwood in the manufacturing process. This makes it much more effective than any of the other known forms of wood usage in liquid consumables manufacturing. It is also much easier to further process wooden sheets to achieve certain characteristics, for example, a predetermined moisture content and uniformity in the degree of heat treatment (toasting levels) or other envisaged processes.

Importantly, rotary cut wooden sheets have a more uniform and thus beneficial, wood anatomical cell orientation and enhanced accessability to the extractive wood storing tissues, such as parenchyma ray tissue. These rays extend in radial bands indicated schematically by numeral (38) in the log (30) in Figure 2 and rotary cutting increases the accessibility of this tissue and therefore enhances the infusion process.

The use of wooden components derived from rotary cut intermediate wooden sheets thus provides a higher yield from trees than with other log breakdown and wood cutting techniques and produces far less waste in the form of cutting debris. Also, compared to wooden barrels, the use of wooden components cut from rotary cut intermediate wooden sheets is considerably cheaper. These factors not only reduce the manufacturing costs but also contribute to sustainable forestry.

Initial organoleptic tests were conducted on two different samples of oak wood in which one sample had its thickness (and thus its large, dominant surface areas) cut tangentially (or generally circumferentially) as provided by this invention and the other sample had its thickness (and thus its large, dominant surface areas) extending in the radial direction with respect to the log as would have been the instance in conventional barrel making. The samples were otherwise identical in shape and size and equivalent amounts of wood of each were tested in both red and white wines in order to wood infuse same. The wines were organoleptically evaluated (by tasting) regularly over a period of 10 days. Clear differences in tempo and total amounts of wood character emerged with the wooden component produced according to this invention showing higher infusion levels.

It will be appreciated that any suitable wood can be used and that any suitable configuration of wooden components can be used such as wooden sheets, strips, rods or blocks. In the instance of wooden sheets, the flexible nature thereof can be selected according to wood type and thickness and extended applications are possible.

Thus, as shown in Figure 8, a container (40) could be lined with a wooden component according to this invention in the form of a suitably flexible wooden sheet (42) to reproduce the typical wooden barrel configuration. The wooden sheet (42) can be removed and replaced as and when desired.

Clearly, any other configuration of wooden sheets can be used and these may include modifications of, or perforations through, the wooden sheet where desired.

Furthermore, other suitable liquid consumable manufacturing processes can also be used in which the liquid consumable is in contact with wooden components according to the invention.

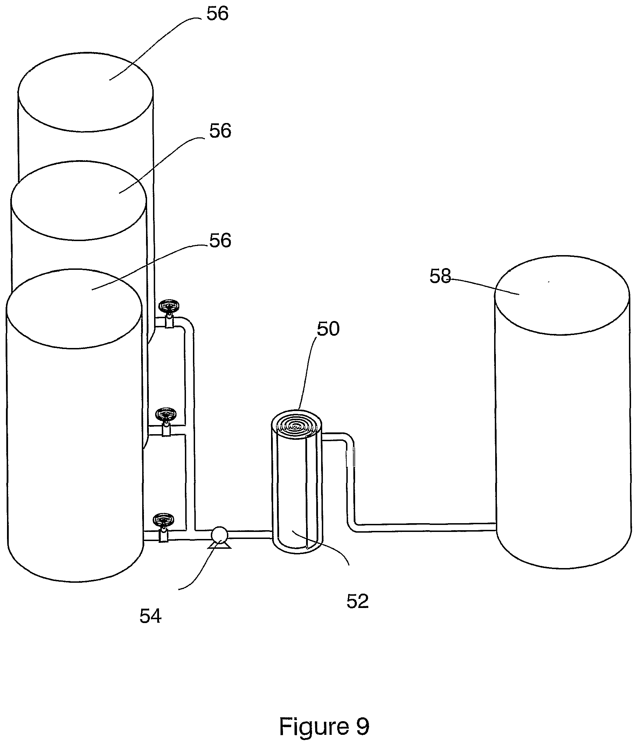

Thus, as shown in Figure 9, a container (50) may be provided with a wooden component as provided by the invention in the form of a loosely (generally spirally) rolled wooden sheet (52) derived from a rotary cut intermediate 20 wooden sheet. A pump (54) may be arranged to pump a liquid consumable such as wine from any one of a number of storage containers (56) through the container (50) and into a further container (58). The residence time of the wine in the container (50) and thus the contact time with the wooden component can be controlled to predetermined values which may be based on past experience to obtain reproducible results from batch to batch.

Alternatively, the wine can be passed through the container (50) multiple times with samples being taken after each pass to determine when the correct characteristics have been imparted to it by the wood (52).

Oxygen can also be added to the container, should it be required for microoxygenation. This could simulate the diffusion of oxygen through the sides of a wooden barrel or any suitable semi permeable membrane or by other transfer mechanism.

Clearly, the thickness, type and configuration of the wooden components will vary from application to application. The use of rotary cut intermediate wooden sheets for the production of wooden components lends itself to many different manufacturing processes for liquid consumables whilst providing the advantages set out above. It will be apparent that the manufacturing process will change depending on the liquid consumable being produced; on the characteristics required of the liquid consumable; as well as the facility for contacting the liquid with the wooden components.

## Claims

1. A method of producing a liquid consumable, the method **characterised in that** the liquid consumable is contained within a container (2, 40, 50) and is contacted with one or more wooden components (4, 42, 52) which have been cut so that:
(i) wood cells of the wooden components have a uniform anatomical cell orientation; and
(ii) ray parenchyma tissue extends longitudinally across a thickness (T) of the wooden components,
in order to enable a uniform and consistent wood infusion process to take place,
wherein said one or more wooden components are severed parts of an intermediate wooden sheet cut from a log (30) of wood by rotary cutting the intermediate wooden sheet tangentially from the outer surface of the log of wood in veneer fashion.

2. A method as claimed in claim 1 in which the wooden component or components have a thickness of from 0.5 mm to 10 mm.

3. A method as claimed in claim 2 in which the wooden component or components have a thickness of from 1 mm to 8 mm.

4. A method as claimed in claim 3 in which the wooden component or components have a thickness of from 3 mm to 6 mm.

5. A method as claimed in any one of the preceding claims in which each wooden component is composed of heartwood thereby substantially excluding sapwood associated with the outer region of a log of wood as well as excluding juvenile wood associated with the central core of a log of wood.

6. A method as claimed in any one of the preceding claims in which the wooden components are dried and suitably "toasted".

## Patentansprüche

1. Verfahren zur Herstellung eines flüssigen Verbrauchsstoffs, wobei das Verfahren **dadurch gekennzeichnet ist, dass** der flüssige Verbrauchsstoff in einem Behälter (2, 40, 50) enthalten ist und mit einer oder mehreren Holzkomponenten (4, 42, 52) in Kontakt gebracht wird, die so zugeschnitten wurden, dass:
(i) Holzzellen der Holzkomponenten eine gleichförmige anatomische Zellausrichtung aufweisen; und
(ii) Strahlenparenchymgewebe sich in Längsrichtung entlang einer Dicke (T) der Holzkomponenten erstreckt,
um zu ermöglichen, dass ein einheitliches und konsistentes Holzinfusionsverfahren stattfindet,
wobei die eine oder mehreren Holzkomponenten abgetrennte Teile eines Zwischenholzplattenschnitts sind, die von einem Holzstamm (30) geschnitten wurden, indem der Zwischenholzplattenschnitt auf furnierartige Weise tangential von der Außenfläche des Holzstamms geschnitten wurde.

2. Verfahren nach Anspruch 1, wobei die Holzkomponente oder -komponenten eine Dicke von 0,5 bis 10 mm aufweisen.

3. Verfahren nach Anspruch 2, wobei die Holzkomponente oder -komponenten eine Dicke von 1 bis 8 mm aufweisen.

4. Verfahren nach Anspruch 3, wobei die Holzkomponente oder -komponenten eine Dicke von 3 bis 6 mm aufweisen.

5. Verfahren nach einem der vorangegangenen Ansprüche, wobei jede Holzkomponente aus Kernholz hergestellt ist, wodurch im Wesentlichen Splintholz, das dem Außenbereich eines Holzstamms zugeordnet ist, ausgeschlossen wird sowie Juvenilholz, das dem Zentralkern eines Holzstamms zugeordnet ist, ausgeschlossen wird.

6. Verfahren nach einem der vorangegangenen Ansprüche, wobei die Holzkomponenten getrocknet und entsprechend "getoastet" werden.

## Revendications

1. Procédé de fabrication d'un produit de consommation liquide, le procédé étant **caractérisé en ce que** le produit consommable liquide est contenu dans un conteneur (2, 40, 50) et est mis en contact avec un ou plusieurs composants en bois (4, 42, 52) qui ont été découpés de sorte que :
(i) les cellules de bois des composants en bois présentent une orientation de cellules anatomiques uniforme ; et
(ii) le tissu parenchyme s'étende longitudinalement dans le sens de l'épaisseur (T) des composants en bois,
afin de permettre à un processus de perfusion du bois uniforme et cohérent d'avoir lieu,
dans lequel ledit ou lesdits composants en bois sont des parties sectionnées d'une planche de bois intermédiaire découpée dans un rondin (30) de bois en coupant de manière rotative la planche de bois intermédiaire de façon tangentielle depuis la surface externe du rondin de bois, dans le sens des noeuds.

2. Procédé selon la revendication 1, dans lequel le ou les composants en bois présentent une épaisseur comprise entre 0,5 mm et 10 mm.

3. Procédé selon la revendication 2, dans lequel le ou les composants en bois présentent une épaisseur comprise entre 1 mm et 8 mm.

4. Procédé selon la revendication 3, dans lequel le ou les composants en bois présentent une épaisseur comprise entre 3 mm et 6 mm.

5. Procédé selon l'une quelconque des revendications précédentes, dans lequel chaque composant en bois est composé de bois de coeur, en excluant sensiblement le bois de coeur traumatique associé à la zone externe d'une rondin de bois, et en excluant également le bois juvénile associé au noyau central d'un rondin de bois.

6. Procédé selon l'une quelconque des revendications précédentes, dans lequel les composants en bois sont séchés et correctement « brunis ».
